# EUROPÄISCHE PATENTSCHRIFT

(11) **EP 0 588 276 B1**
(45) Veröffentlichungstag und Bekanntmachung des Hinweises auf die Patenterteilung: **16.12.1998**
(21) Anmeldenummer: 93114653.4
(22) Anmeldetag: 13.09.1993
(51) Int. Cl.: B32B 27/08

(54) **Mehrschichtfolienverbund**
Multilayered composite film
Feuille composite multicouche

(30) Priorität: 18.09.1992 DE 4231287
(43) Veröffentlichungstag der Anmeldung: 23.03.1994
(73) Patentinhaber: HOECHST AKTIENGESELLSCHAFT, 65926 Frankfurt am Main (DE)
(72) Erfinder: Beer, Ekkehard, D-65307 Bad Schwalbach (DE); Crass, Günther, D-65232 Taunusstein (DE)
(74) Vertreter: Zounek, Nikolai, Dipl.-Ing.

(56) Entgegenhaltungen:
- EP-A- 0 194 588
- EP-A- 0 220 621
- EP-A- 0 282 917
- EP-A- 0 418 836
- EP-A- 0 444 340

## Beschreibung

Die Erfindung betrifft einen Mehrschichtfolienverbund aus einer Deckschicht und Mehrschichtfolien, von denen jede Mehrschichtfolie aus einer Polypropylenschicht und zwei Siegelschichten besteht.

Für technische Anwendungen Werden biaxial orientierte, koextrudierte Polypropylenfolien eingesetzt. Da Polypropylen unpolar ist und somit die Haftung für andere Schichten auf der Oberfläche der Polypropylenfolie sehr schlecht ist, müssen für nahezu alle Anwendungsfälle die Haftungseigenschaften der Polypropylenfolie durch Vorbehandlung mittels einer Koronaentladung oder durch Flammbehandlung verbessert werden. Dabei ist nachteilig, daß die zur Verbesserung der Bedruck- und Kaschierbarkeit koronabehandelten Polypropylenfolien beim Aufwickeln zu einer Rolle zum Verblocken auf der Rolle neigen.

Aus der EP-A - 2 20 621 ist eine biaxial orientierte, koextrudierte Mehrschichtfolie mit einer Basisschicht aus Polypropylen bekannt, die nicht modifiziert ist und auf der zumindest eine ohne Koronabehandlung bedruckbare Deckschicht mittels Koextrusion aufgebracht ist. Eine oder beide Deckschichten bestehen aus einem Copolyester in Form von Polykondensaten aus der Terephthalsäure, Isophthalsäure und Ethylenglykol oder Butandiol. Diese bekannte Mehrschichtfolie wird als Bestandteil von mehrschichtigen Verbundmaterialien für die Ver packung verwendet.

Die EP-A - 0 282 917 beschreibt eine metallisierbare, siegelfähige, biaxial streckorientierte Mehrschichtfolie, die eine Basisschicht im wesentlichen aus Polypropylen, eine erste polyolefinische Deckschicht und eine zweite polyolefinische Deckschicht umfaßt. Alle Schichten der Mehrschichtfolie enthalten ein Neutralisationsmittel und einen Stabilisator gegen thermischen Abbau. Als Neutralisationsmittel wird Calciumcarbonat mit einer absoluten Teilchengröße kleiner als 10 µm, einer mittleren Teilchengröße kleiner als 0,1 µm und einer spezifischen Oberfläche größer als 40 m²/g verwendet. Bei dem Stabilisator handelt es sich um einen phenolischen Stabilisator mit einer Molmasse größer als 1000 g/mol. Eine der polyolefinischen Deckschichten enthält ein Antiblockmittel. Die Dicke der beiden Deckschichten liegt im Bereich von 0,2 bis 0,7 µm, und sie bestehen im wesentlichen aus einem Propylen-Ethylen-Copolymer oder einem Ethylen-Propylen-Butylen-Terpolymerisat. Diese Mehrschichtfolie ist metallisierbar und kann über eine ihrer siegelbaren Deckschichten mit sich dubliert werden oder über diese Deckschicht mit einer ein- oder zweischichtigen Polypropylenfolie verbunden sein. Insofern ist eine Verwendung dieser metallisierten Folie als Verpackungsfolie in einem Folien- oder Papierverbund möglich. Wegen der geringen Dicke der beiden Deckschichten, die primär Siegelschichten sind, ist ein Bedrucken mit einem Dekor nicht möglich, so daß auch der Einsatz eines aus solchen Schichten gebildeten Verbundes als Kaschierfolienverbund für Holzprodukte nicht in Frage kommt.

In der EP-A - 194 588 ist eine bedruckbare und beidseitig siegelbare, biaxial orientierte Polyolefin-Mehrschichtfolie beschrieben, die beidseitig Siegelschichten aufweist. Die Basisschicht der Polyolefin-Mehrschichtfolie bilden im wesentlichen Propylenpolymere, während die beiden Siegelschichten aus siegelbaren Olefinpolymeren bestehen, wobei in die eine Siegelschicht Polydialkylsiloxan eingebettet ist, um die Gleiteigenschaften zu verbessern. Diese Siegelschicht ist nicht koronabehandelt, während die andere Siegelschicht koronabehandelt wird und nur auf ihrer Außenseite mit Polydialkylsiloxan belegt wird, das beim Aufwickeln der Mehrschichtfolie durch den Kontakt der beiden Siegelschichten übertragen wird. Die mit Polydialkylsiloxan belegte Siegelschicht wird zuvor koronabehandelt, wodurch erreicht wird, daß die Mehrschichtfolie auf dieser Siegelschicht bedruckbar ist und darüber hinaus auch entsprechend gute Gleiteigenschaften besitzt. Eine derartige Polyolefin-Mehrschichtfolie wird als Verpackungsfolie auf schnellaufenden Verpackungsmaschinen verwendet.

Die Oberflächen moderner Möbel, Möbelteile, Türelemente und sonstige, mit einem Dekor versehene Holzgegenstände sind überwiegend mit PVC-Folien kaschiert. Die Oberfläche dieser Folien muß wegen des aufzubringenden Dekors gut bedruckbar sein.

Im Rahmen der allgemeinen Substitution von PVC werden alternative Folien bzw. Folienverbunde gesucht. Versuche mit unorientierten und biaxial orientierten Polyesterfolien scheiterten bisher an den zu hohen Rückstellkräften von Polyethylenterephthalat beim Beschichten von Ecken und Kanten und insbesondere an der mangelnden UV-Stabilität dieser Folien.

Versuche mit unorientierten Polypropylenfolien führten wegen unzureichender Oberflächengüte und Problemen beim Beschichten von Ecken und Kanten durch Anstrecken der Folien ebenfalls nicht zum gewünschten Erfolg, da Neckbildung und inhomogene Dickenverteilung auftraten.

Orientierende Untersuchungen mit biaxial orientierten Polypropylenfolien (BOPP) ergeben zwar befriedigende Ergebnisse beim Beschichten der Ecken und Kanten, jedoch sind die erhältlichen Folien zu dünn, so daß sie als Kaschiermaterial nicht in Frage kommen, und darüber hinaus ist die durch Koronabehandlung erzielte Bedruckbarkeit nicht ausreichend.

Aufgabe der Erfindung ist es, ein Kaschiermaterial auf der Basis von Polypropylen zu schaffen, das ohne Vorbehandlung durch eine Koronaentladung und ohne Flammbehandlung seiner Oberflächen gut bedruckbar ist, hohe Oberfächengüte, homogene Dickenverteilung und ausreichende Dicke zum Kaschieren von Holzgegenständen bei fehlender Neckbildung besitzt.

Diese Aufgabe wird erfindungsgemäß in der Weise gelöst, daß einzelne koextrudierte, siegelfähige, biaxial orientierte Mehrschichtfolien mit einer Dicke von 32,5 bis 95 µm miteinander dubliert oder thermisch laminiert sind, daß die Deckschicht aus einem Copolyester mit einer Dicke von 10 bis 15 µm ohne Koronabehandlung mit einem Dekor bedruckbar ist und daß die Dicke des Verbundes 80 bis 200 µm beträgt.

In Weitergestaltung der Erfindung sind zwei siegelbare, 50 µm dicke koextrudierte BOPP-Mehrschichtfolien mittels erwärmter Walzen miteinander dupliert und mit einem Copolyester aus wäßriger Dispersion beschichtet.

In weiterer Ausgestaltung der Erfindung sind zwei siegelbare, 50 µm dicke BOPP-Mehrschichtfolien mit einer 10 bis 15 µm dicken PP-Folie mit einer Deckschicht aus einem Copolyester laminiert. Die einzelne koextrudierte Polypropylen-Mehrschichtfolie nach der Erfindung besteht aus einer Polypropylen-Basisschicht und zwei Siegelschichten aus Olefinpolymeren, und die eine Siegelschicht enthält 0,5 bis 3 Gew.-% Polydialkylsiloxan, und die andere Siegelschicht weist Polydialkylsiloxan nur auf ihrer Außenfläche auf.

Der Mehrschichtfolienverbund nach der Erfindung wird insbesondere als Kaschiermaterial für Möbel, Möbelteile, Türelemente und sonstige, mit einem Dekor versehene Holzgegenstände verwendet.

Das Polypropylen der Basisschicht kann ein Homo- oder Copolymerisat des Propylens oder einer Mischung aus Propylen-Homo- und Propylen-Copolymerisaten sein. In den Copolymerisaten beträgt die Comonomermenge im allgemeinen maximal 10 Gew.%, bezogen auf das Copolymerisat. Bevorzugte Comonomere sind Ethylen und Buten-(1). Das Polypropylen der Basisschicht ist beispielsweise in der DE-A 35 38 102 im einzelnen beschrieben.

Die Basisschicht kann auch Additive, wie Antioxidantien, Antistatika, Gleitmittel, Nukleierungsmittel, Neutralisationsmittel und/oder Stabilisatoren in einer jeweils wirksamen Menge, enthalten, wodurch sich dann die Dichte der Basisschicht, die im wesentlichen aus Polypropylen besteht, noch geringfügig verändern kann.

Bei den Deckschichten handelt es sich in der Regel um Copolyester in Form von thermoplastischen Polykondensationsprodukten aus zwei oder mehreren mehrbasischen aliphatischen oder aromatischen Carbonsäuren und zweiwertigen Alkoholen. Beispiele für Copolyester sind Polykondensate aus Terephthalsäure, Isophthalsäure und Ethylenglykol oder Butandiol. Anstelle der Isophthalsäure können auch Hadipinsäure, Acaleinsäure oder Sebacinsäure als Komponenten verwendet werden.

Die mehrbasischen Carbonsäuren können zur Verbesserung der Haftung von Beschichtungen noch funktionelle Gruppen enthalten.

Wie schon voranstehend erwähnt wurde, enthalten die Siegelschichten zur Optimierung der Schlupf- und Gleiteigenschaften Polydialkylsiloxan, wie beispielsweise Polydimethylsiloxan, mit einer Viskosität von 1.000 bis 100.000 mm²/s bei 25 °C.

Die Polypropylen-Basisschicht besteht bevorzugt aus isotaktischem Polypropylen mit einem n-heptanlöslichen Anteil von 15 Gew.% und weniger, Copolymeren von Ethylen und Propylen mit einem Ethylengehalt von 10 Gew.% oder weniger, oder Copolymeren von Propylen mit C₄-C₈-α-Olefinen mit einem α-Olefingehalt von ≤ 10 Gew.%.

In einer bestimmten Ausführungsform der Erfindung werden zwei koextrudierte Polypropylen-Mehrschichtfolien, von denen jede aus einer Polypropylen-Basisschicht und zwei Siegelschichten besteht, mittels zweier beheizter Walzen zusammengeführt und miteinander gesiegelt. Die außenliegenden Deckschichten aus Copolyester des zu erhaltenden Mehrschichtfolienverbundes sind ohne Schwierigkeiten mit Kaltsiegelschichten, nämlich Klebern, benetzbar, so daß der Mehrschichtfolienverbund auf eine Holzfläche oder einen Holzgegenstand aufkaschiert werden kann. Die außenliegende Deckschicht des Mehrschichtfolienverbundes ist darüber hinaus gut bedruckbar, so daß das jeweils gewünschte Dekor aufgebracht werden kann.

Die Gesamtdicke des Mehrschichtfolienverbundes beträgt 80 bis 200 µm, insbesondere 100 bis 150 µm, wobei die Dicke der einzelnen Deckschicht 10 bis 15 µm betragen kann, insbesondere 12 µm. Die Dicke der einzelnen BOPP-Mehrschichtfolie liegt im Bereich von 32,5 bis 95 µm, insbesondere bei 50 µm.

Im folgenden sind zwei Beispiele für den Mehrschichtfolienverbund sowie zwei Vergleichsbeispiele angeführt.

### Beispiel 1

Es wurden zwei siegelbare, orientierte Polypropylenfolien, die nur an den einander zugewandten Seiten mit je einer, nicht koronabehandelten Siegelschicht aus Copolyester ausgerüstet waren, mittels erwärmter Walzen dupliert und anschließend mit einer wäßrigen Dispersion einseitig beschichtet und getrocknet. Aus der wäßrigen Dispersion wurde das Copolyester als Deckschicht auf der einen Seite des Mehrschichtfolienverbundes abgeschieden.

Nach dem Trocknen wurde die Oberfläche bzw. Außenfläche des Mehrschichtfolienverbundes mit dem Dekor bedruckt und der Mehrschichtfolienverbund auf ein Türelement aufkaschiert. Die Kanten und Abrundungen des beschichteten Türelements waren nach vier Wochen optisch einwandfrei, es zeigte sich keinerlei Neckbildung, d.h. durch die eventuelle Rückstellkraft des Kaschiermaterials verursachte Faltenbildung, Bloßlegung von Kanten und Ecken oder das Abheben des Kaschiermaterials von den Abrundungen.

### Beispiel 2

Es wurden zwei 50 µm dicke, orientierte Polypropylenfolien, wie sie im Beispiel 1 eingesetzt wurden, mit einer Polypropylenfolie mit beidseitig koextrudierten Copolyester-Deckschichten laminiert. Die Polypropylenfolie mit zwei vorhandenen Deckschichten aus Copolyester wurde durch eine Flachdüse koextrudiert, bevor sie mit den beiden Polypropylenfolien laminiert wurde.

Nach dem Laminieren wurde die außenliegende Deckschicht des Mehrschichtfolienverbundes mit dem gewünschten Dekor bedruckt und anschließend der Mehrschichtfolienverbund auf die Oberfläche eines Türelements aufkaschiert. Die optische Beurteilung des Türelements nach vier Wochen bei der Qualitätskontrolle entsprach weitgehend derjenigen des Beispiels 1.

### Vergleichsbeispiel 1

Es wurden zwei siegelbare 50 µm dicke Polypropylenfolien analog zu Beispiel 1 miteinander kaschiert und zusätzlich koronabehandelt. Danach wurde auf die eine Deckschicht ein Dekor aufgedruckt und anschließend der Mehrschichtfolienverbund auf ein Türelement aufkaschiert. Die Haftung des Dekors, insbesondere an den Ecken des Türelements, war mangelhaft und führte zur Aussortierung des Türelements.

### Vergleichsbeispiel 2

Eine 50 µm dicke orientierte Polypropylen-Monofolie wurde aus wäßriger Dispersion mit einem Copolyester nach Beispiel 1 beschichtet. Nach dem Trocknen wurde die so erhaltene Copolyester-Deckschicht der Mehrschichtfolie mit einem Dekor bedruckt und die Mehrschichtfolie auf ein Türelement aufkaschiert. Obwohl die Dekorhaftung gut war, entstanden an den Ecken durch Überdehnung der zu dünnen Mehrschichtfolie optische Effekte, die zur Aussortierung des Türelements führten.

## Patentansprüche

1. Mehrschichtfolienverbund aus einer Deckschicht und Mehrschichtfolien, von denen jede Mehrschichtfolie aus einer Polypropylenschicht und zwei Siegelschichten besteht, dadurch gekennzeichnet, daß einzelne koextrudierte, siegelfähige, biaxial orientierte Mehrschichtfolien mit einer Dicke von 32,5 bis 95 µm miteinander dubliert oder thermisch laminiert sind, daß die Deckschicht aus einem Copolyester mit einer Dicke von 10 bis 15 µm ohne Koronabehandlung mit einem Dekor bedruckbar ist und daß die Dicke des Verbundes 80 bis 200 µm beträgt.

2. Mehrschichtfolienverbund nach Anspruch 1, dadurch gekennzeichnet, daß zwei siegelbare, 50 µm dicke, koextrudierte BOPP-Mehrschichtfolien mittels erwärmter Walzen miteinander dupliert und mit einem Copolyester aus wäßriger Dispersion beschichtet sind.

3. Mehrschichtfolienverbund nach Anspruch 1, dadurch gekennzeichnet, daß zwei siegelbare, 50 µm dicke BOPP-Mehrschichtfolien mit einer 10 bis 15 µm dicken PP-Folie und mit einer Deckschicht aus einem Copolyester laminiert sind.

4. Mehrschichtfolienverbund nach Anspruch 1, dadurch gekennzeichnet, daß die einzelne koextrudierte Polypropylen-Mehrschichtfolie aus einer PP-Basisschicht und zwei Siegelschichten aus Olefinpolymeren besteht und daß die eine Siegelschicht 0,5 bis 3 Gew.% Polydialkylsiloxan enthält und die andere Siegelschicht Polydialkylsiloxan nur auf ihrer Außenfläche aufweist.

5. Mehrschichtfolienverbund nach Anspruch 4, dadurch gekennzeichnet, daß das Polydialkylsiloxan ein Polydimethylsiloxan mit einer Viskosität von 1.000 bis 100.000 mm²/s bei 25 °C ist.

6. Mehrschichtfolienverbund nach Anspruch 4, dadurch gekennzeichnet, daß die PP-Basisschicht aus isotaktischem Polypropylen mit einem n-heptanlöslichen Anteil von 15 Gew.% und weniger, Copolymeren von Ethylen und Propylen mit einem Ethylengehalt von 10 Gew.% oder weniger, oder Copolymeren von Propylen mit C₄-C₈-α-Olefinen mit einem α-Olefingehalt von ≤ 10 Gew.% besteht.

7. Mehrschichtfolienverbund nach Anspruch 1, dadurch gekennzeichnet, daß die Deckschicht aus Copolyester in Form von Polykondensaten aus Terephthalsäure, Isophthalsäure und Ethylenglykol oder Butandiol vorliegt.

8. Verwendung eines Mehrschichtfolienverbundes nach einem oder mehreren der Ansprüche 1 bis 7 als Kaschiermaterial für Möbel, Möbelteile, Türelemente und sonstige mit einem Dekor versehene Holzgegenstände.

## Claims

1. A multilayered composite film made from an outer layer and multilayered films, where each multilayered film is composed of a polypropylene layer and two sealable layers, wherein individual coextruded, sealable, biaxially oriented multilayered films of thickness from 32.5 to 95 µm have been mutually doubled or thermally laminated, and the outer layer made from a copolyester of thickness from 10 to 15 µm can be printed with a decorative effect without corona treatment, and the thickness of the composite is from 80 to 200 µm.

2. The multilayered composite film as claimed in claim 1, wherein two sealable, 50 µm thick coextruded BOPP multilayered films have been mutually doubled using heated rolls and coated with a copolyester from an aqueous dispersion.

3. The multilayered composite film as claimed in claim 1, wherein two sealable, 15 µm thick BOPP multilayered films have been laminated with a PP film of from 10 to 15 µm thickness and with an outer layer made from a copolyester.

4. The multilayered composite film as claimed in claim 1, wherein the individual coextruded polypropylene multilayered film is composed of a PP base layer and two sealable layers made from olefin polymers, and that the one sealable layer comprises from 0.5 to 3% by weight of polydialkylsiloxane and the other sealable layer has polydialkylsiloxane on its outer surface only.

5. The multilayered composite film as claimed in claim 4, wherein the polydialkylsiloxane is a polydimethylsiloxane with a viscosity of from 1000 to 100,000 mm²/s at 25°C.

6. The multilayered composite film as claimed in claim 4, wherein the PP base layer is composed of isotactic polypropylene with an n-heptane-soluble fraction of 15% by weight or less, copolymers of ethylene and propylene with an ethylene content of 10% by weight or less, or copolymers of propylene with C₄-C₈ α-olefins with an α-olefin content of ≤ 10% by weight.

7. The multilayered composite film as claimed in claim 1, wherein the outer layer of copolyester takes the form of polycondensates made from terephthalic acid, isophthalic acid and ethylene glycol or butanediol.

8. The use of a multilayered composite film as claimed in one or more of claims 1 to 7 as laminating material for furniture, furniture parts, door elements and other wooden articles provided with a decorative effect.

## Revendications

1. Feuille composite multicouche constituée d'une couche de revêtement et de feuilles multicouches, où chaque feuille multicouche est constituée d'une couche de polypropylène et de deux couches scellables, caractérisée en ce qu'on double l'une sur l'autre ou on stratifie thermiquement des feuilles multicouches individuelles orientées biaxialment, scellables, coextrudées, d'une épaisseur de 32.5 à 95 µm, en ce que la couche de revêtement en copolyester d'une épaisseur de 10 à 15 µm petit être imprimée avec un motif sans traitement en effet corona et en ce que l'épaisseur du composite s'élève à 80 à 200 µm.

2. Feuille composite multicouche selon la revendication 1, caractérisée en ce qu'on double l'une sur l'autre deux feuilles multicouches en BOPP coextrudées scellables, d'une épaisseur de 50 µm, au moyen de cylindres chauffants et en ce qu'on les recouvre avec un copolyester à partir d'une dispersion aqueuse.

3. Feuille composite multicouche selon la revendication 1, caracterisée en ce qu'on lamine deux feuilles multicouches en BOPP scellables, de 50 µm d'épaisseur avec une feuille de PP de 10 à 15 µm d'épaisseur et avec une couche de revêtement en copolyester.

4. Feuille composite multicouche selon la revendication 1, caractérisée en ce que la feuille multicouche individuelle en polypropylène coextrudée est constituée d'une couche de base en PP et de deux couches scellables en polymère oléfinique et en ce qu'une des couches scellables contient de 0,5 à 3% de polydialkylsiloxane et en ce que l'autre couche scellable ne comporte un polydialkylsiloxane que sur sa surface extérieure.

5. Feuille composite multicouche selon la revendication 4, caractérisée en ce que le polydialkylsiloxane est un polydiméthylsiloxane avec une viscosité de 1 000 à 100 000 mm²/s à 25°C.

6. Feuille composite multicouche selon la revendication 4, caractérisée en ce que la couche de base en PP est constituée de polypropylène isotactique avec une portion soluble dans le n-heptane égale à 15% en poids et moins, de copolymères d'éthylène et de propylène avec une teneur en éthylène égale à 10% en poids ou moins ou de copolymères de propylène avec des α-oléfines en C₄-C₈ avec une teneur en α-oléfines inférieure ou égale à 10% en poids.

7. Feuille composite multicouche selon la revendication 1, caractérisée en ce que la couche de revêtement est constituée de copolyester sous forme de produits de polycondensation entre l'acide téréphtalique, l'acide isophtalique et l'éthylèneglycol ou le butanediol.

8. Utilisation d'une feuille composite multicouche selon l'une ou plusieurs des revendications 1 à 7 en tant que matériau de stratification pour des meubles, des parties de meubles, des éléments de porte et d'autres articles en bois munis d'un motif.
